# EUROPÄISCHE PATENTANMELDUNG

(11) **EP 3 569 114 A1**
(43) Veröffentlichungstag der Anmeldung: **20.11.2019**
(21) Anmeldenummer: 18173326.2
(22) Anmeldetag: 18.05.2018
(51) Int. Cl.: A47J 31/52, A47J 31/20

(54) **ZUBEREITUNGSVORRICHTUNG FÜR EXTRAKTIONSGETRÄNKE UND HEBEVORRICHTUNG FÜR SIEBE**

(71) Anmelder: Carrera Brands Limited, Kowloon Bay, Kowloon (HK)
(72) Erfinder: Zimmer, Dirk Hagen, 40489 Düsseldorf (DE)
(74) Vertreter: Samson & Partner Patentanwälte mbB

(57) **Zusammenfassung**

Die vorliegende Offenbarung betrifft eine Hebevorrichtung für ein Sieb zur Zubereitung von Extraktionsgetränken, insbesondere für ein Teesieb, welche eine Zeitschaltuhr, eine Feder zur Erzeugung einer Hebekraft auf das Sieb, einen zwischen einer ersten Riegelstellung und einer zweiten Riegelstellung bewegbaren Riegel und einen Magneten umfasst. Der Riegel hält in der ersten Riegelstellung die Feder gespannt und lässt in der zweiten Riegelstellung eine Entspannung der Feder zu. Der Magnet ist dazu ausgelegt, in einer Nullstellung der Zeitschaltuhr den Riegel mittels magnetischer Wechselwirkung von der ersten Riegelstellung in die zweite Riegelstellung zu bewegen. Die Offenbarung betrifft ferner eine Vorrichtung zur Zubereitung von Extraktionsgetränken, insbesondere einen Teekocher, der ein Gehäuse, das einen Raum zur Aufnahme von Wasser umfängt, ein Sieb, welches zwischen einer ersten Siebposition, in der das Sieb sich in dem genannten Raum befindet, und einer zweiten Siebposition bewegbar ist, und eine derartige Hebevorrichtung umfasst. Die Hebevorrichtung hält in der ersten Riegelstellung das Sieb in der ersten Siebposition und lässt in der zweiten Riegelstellung eine Bewegung des Siebs in die zweite Siebposition zu.

## Beschreibung

### Gebiet der Erfindung

Die vorliegende Erfindung betrifft das Gebiet der Vorrichtungen zur Zubereitung von Extraktionsgetränken, insbesondere Teekocher, sowie Hebevorrichtungen für ein Sieb zur Zubereitung von Extraktionsgetränken.

### Hintergrund der Erfindung

Extraktionsgetränke, wie Tee oder Kaffee, können zubereitet werden, indem ein auf Pflanzenteilen basierendes Extraktionsgut über eine gewisse Zeitspanne heißem Wasser ausgesetzt wird. Die Pflanzenteile können beispielsweise Teeblätter oder gemahlene Kaffeebohnen umfassen. Das Extraktionsgut befindet sich während des Brühvorgangs typischerweise in einem Sieb, sodass es für die Extraktion in Kontakt mit dem Wasser kommen kann und sodass es bei Beendigung des Brühvorgangs aus dem Wasser entfernt werden kann.

Im Laufe des Brühvorgangs werden unterschiedliche Bestandteile der Pflanzenteile extrahiert. Beispielsweise können Bitterstoffe den Geschmack des Tees entscheidend beeinflussen. Die Zeitspanne, in der das Extraktionsgut dem Wasser ausgesetzt ist (Brühzeit), hat Einfluss auf die Zusammensetzung des resultierenden Extraktionsgetränks. Zur Zubereitung eines Getränks mit gleichbleibender Qualität und Geschmack soll die Brühzeit bei jedem Brühvorgang im Wesentlichen gleichbleiben. Die Wahl einer Brühzeit dient insbesondere der Steuerung der Extraktion von gewünschten Bestandteilen unter Minimierung der Extraktion von ungewünschten Bestandteilen aus den Pflanzenteilen.

Die gewünschte Brühzeit kann sich jedoch je nach Art des Extraktionsguts unterscheiden. So werden beispielsweise Kräutertees oft 5-10 Minuten gebrüht, wohingegen schwarze Tees oft lediglich 1-3 Minuten gebrüht werden.

Die Zubereitungswünsche können sich zudem je nach Konsument des Extraktionsgetränks unterscheiden. So bevorzugen manche Konsumenten einen "starken" Tee (lange Brühzeit) und andere einen Tee mit kürzerer Brühzeit.

Es sind aus dem Stand der Technik Vorrichtungen zur Messung von Brühzeiten und zur Unterbrechung des Brühvorgangs von Extraktionsgetränken nach einer vorbestimmten Zeit bekannt. Diese Vorrichtungen weisen eine Reihe von Nachteilen auf. Hierzu zählen u.a. aufwendige oder fehleranfällige Herstellung, schwierige oder fehleranfällige Bedienung, unzuverlässige Auslösung der Unterbrechung, umfangreiche Baugröße, Notwendigkeit einer externen Stromversorgung.

Vor diesem Hintergrund ist es Aufgabe der vorliegenden Erfindung, eine angesichts dieser und anderer Nachteile verbesserte Vorrichtung zur Zubereitung von Extraktionsgetränken bereitzustellen, insbesondere Vorrichtungen zur Einstellung der Brühzeit und Beendigung des Brühvorgangs.

### Beschreibung der Erfindung

Diese Aufgabe wird gelöst durch Vorrichtungen gemäß den unabhängigen Schutzansprüchen, insbesondere eine Hebevorrichtung für ein Sieb sowie eine Zubereitungsvorrichtung mit Sieb und einer derartigen Hebevorrichtung. Die abhängigen Ansprüche beschreiben bevorzugte Ausführungsformen.

In einem ersten Aspekt betrifft die vorliegende Erfindung eine Vorrichtung zur Zubereitung von Extraktionsgetränken, im Folgenden Zubereitungsvorrichtung. Eine erfindungsgemäße Zubereitungsvorrichtung umfasst ein Gehäuse, ein Sieb und eine Hebevorrichtung zum Heben des Siebs. Die Zubereitungsvorrichtung kann insbesondere ein Teekocher mit einem Teesieb oder eine Kaffeemaschine mit einem Kaffeesieb sein.

Das Gehäuse umfängt einen Raum zur Aufnahme von Wasser. Das Sieb ist zwischen einer ersten Siebposition und einer zweiten Siebposition bewegbar. Jedenfalls diese erste Siebposition befindet sich innerhalb des Raums zur Aufnahme von Wasser.

Im Betrieb kann sich das Sieb während des Brühvorgangs in der ersten Siebposition befinden, sodass in dem Sieb befindliches Extraktionsgut mit dem Wasser in Kontakt kommt. Bei Beendigung des Brühvorgangs kann das Sieb in die zweite Siebposition bewegt werden. Die zweite Siebposition kann innerhalb oder außerhalb des genannten Raums zur Aufnahme von Wasser sein. Vorzugsweise ist die zweite Siebposition derart vorbestimmt, dass sich das Sieb - bei ordnungsgemäßer Befüllung der Zubereitungsvorrichtung mit Wasser - nicht in Kontakt mit dem Wasser befindet.

Die Hebevorrichtung ist eine erfindungsgemäße Hebevorrichtung mit einem Riegel wobei die Hebevorrichtung in einer ersten Riegelstellung das Sieb in der ersten Siebposition hält und in einer zweiten Riegelstellung eine Bewegung des Siebs in die zweite Siebposition zulässt.

Die Zubereitungsvorrichtung kann in manchen Ausführungsformen zudem Mittel zum Erhitzen von Wasser umfassen. In solchen Ausführungsformen ist die Zubereitungsvorrichtung dazu eingerichtet, sowohl das Wasser auf eine Brühtemperatur, insbesondere Siedetemperatur (100°C), zu erhitzen als auch den Brühvorgang des Extraktionsgetränks nach Ablauf der Brühzeitspanne zu beenden. Die Brühtemperatur kann vorbestimmt oder durch den Nutzer wählbar sein. Ein Absenken des Siebs kann vor, bei oder nach Erreichen der Brühtemperatur geschehen. Ferner kann es manuell oder automatisch geschehen.

In einem weiteren Aspekt betrifft die vorliegende Erfindung eine Hebevorrichtung für ein Sieb zur Zubereitung von Extraktionsgetränken. Eine erfindungsgemäße Hebevorrichtung umfasst eine Zeitschaltuhr, eine Feder zur Erzeugung einer Hebekraft auf das Sieb, einen Riegel und einen Magneten.

Der Riegel ist zwischen einer ersten Riegelstellung und einer zweiten Riegelstellung bewegbar, wobei er in der ersten Riegelstellung die Feder gespannt hält und in der zweiten Riegelstellung eine Entspannung der Feder zulässt.

Der Magnet ist dazu ausgelegt, in einer Nullstellung der Zeitschaltuhr den Riegel mittels magnetischer Wechselwirkung von der ersten Riegelstellung in die zweite Riegelstellung zu bewegen. In manchen Ausführungsformen umfasst die Vorrichtung hierzu einen Gegenpol, mit dem der Magnet zusammenwirken kann, um den Riegel zu bewegen. Bevorzugt kann der Gegenpol als separates Bauteil ausgestaltet sein oder einstückig mit einem anderen Bauteil, insbesondere dem Riegel, ausgestaltet sein.

Die Zeitschaltuhr ist dazu eingerichtet, eine Brühzeitspanne einzustellen, während der das Sieb in der ersten Siebposition verbleibt. Die Einstellung kann herstellerseitig durch Vorbestimmung einer bestimmten Brühzeitspanne vorgenommen werden oder kann nutzerseitig durch Auswahl einer gewünschten Brühzeitspanne vorgenommen werden. Insbesondere kann es sich bei der Zeitschaltuhr um eine mechanische Zeitschaltuhr oder eine digitale Zeitschaltuhr handeln. Mechanische Zeitschaltuhren können entweder mit einem Quarzwerk oder mit Räderwerk und Hemmung ausgestattet sein.

In manchen Ausführungsformen umfasst die Zeitschaltuhr eine Anzeige zur Darstellung der Brühzeitspanne und/oder eine Anzeige zur Darstellung der verbleibenden Restlaufzeit. Die Anzeige kann beispielsweise mittels einer Digitalanzeige oder mittels eines Zeigers und eines Zifferblatts erfolgen.

Die Zeitschaltuhr kann dazu dienen, ab Beginn des Brühvorgangs den Ablauf der vorbestimmten oder gewünschten Brühzeitspanne zu messen. Bei Ablauf der Brühzeitspanne erreicht die Zeitschaltuhr eine Nullstellung. Im Falle einer mechanischen Zeitschaltuhr kann die Nullstellung insbesondere mit einer Zeigerstellung auf "0" auf dem Zifferblatt übereinstimmen.

Die erfindungsgemäße Hebevorrichtung ist dazu ausgelegt, dass das Erreichen der Nullstellung der Zeitschaltuhr den Magneten dazu veranlasst, den Riegel aus der ersten Riegelstellung in die zweite Riegelstellung zu bewegen. Insbesondere kann es sich um einen Schieberiegel handeln, der zwischen der ersten Riegelstellung und der zweiten Riegelstellung verschiebbar ist.

In manchen Ausführungsformen ist der Riegel derart vorgespannt, dass er sich - falls keine weiteren Kräfte wirken - in der ersten Riegelstellung befindet. Dies kann durch eine Riegelfeder erreicht werden, welche auf den Riegel eine Riegelfederkraft hin zu der ersten Riegelstellung ausübt. In solchen Ausführungsformen muss eine magnetische Wechselwirkung die Riegelfederkraft überwinden, bevor eine Bewegung in die zweite Riegelstellung erreicht wird. Bei der Riegelfeder kann es sich beispielsweise um eine Schraubenfeder, insbesondere eine Schraubendruckfeder oder eine Schraubenzugfeder handeln.

Allgemein dient der Magnet dazu, ein magnetisches Feld in seinem Umfeld zu erzeugen um eine anziehende oder abstoßende Wechselwirkung mit einem anderen Körper einzugehen. Bei der Wechselwirkung handelt es sich um eine magnetische, insbesondere eine ferromagnetische, Wechselwirkung. Bei dem Magneten kann es sich beispielsweise um einen Permanentmagneten oder um einen Elektromagneten handeln.

Ein Permanentmagnet erzeugt stetig ein magnetisches Feld in seinem Umfeld und kann dazu dienen, eine anziehende oder abstoßende Wechselwirkung mit einem anderen Körper einzugehen, sobald dieser in räumlicher Nähe zu dem Permanentmagneten ist.

Ein Elektromagnet erzeugt ein magnetisches Feld in seinem Umfeld, falls er von elektrischem Strom durchflossen wird. Beispielsweise kann ein Elektromagnet eine Spule und einen Weicheisenkern umfassen. Ein Elektromagnet kann somit dazu dienen, eine anziehende oder abstoßende Wechselwirkung mit einem anderen Körper einzugehen, sobald er von elektrischem Strom durchflossen wird.

Insbesondere kann der andere Körper ein weiterer Permanentmagnet sein oder es kann sich um einen Körper handeln, der beispielsweise aufgrund ferromagnetischer Eigenschaften, mit einem Magneten wechselwirkt, ohne dass er selbst ein magnetisches Feld erzeugt. Insbesondere kann der andere Körper ein Metall, z.B. Eisen, Cobalt oder Nickel, oder eine metallische Legierung umfassen.

Falls es sich bei dem anderen Körper um einen weiteren Magneten handelt, kann die Wechselwirkung anziehend sein (indem andersartige magnetische Pole zueinander ausgerichtet sind) oder abstoßend sein (indem gleichartige magnetische Pole zueinander ausgerichtet sind).

Zum Zwecke der Beschreibung der vorliegenden Erfindung wird ein anderer Körper, der mit dem Magneten wechselwirkt, als Gegenpol bezeichnet, unabhängig davon ob es sich um einen weiteren Permanentmagneten oder um einen Körper ohne permanentes magnetisches Feld handelt und unabhängig davon, ob die Wechselwirkung mit dem Magneten anziehend oder abstoßend ist.

Der Magnet in einer erfindungsgemäßen Hebevorrichtung ist dazu ausgelegt, den Riegel mittels magnetischer Wechselwirkung von der ersten Riegelstellung in die zweite Riegelstellung zu bewegen.

Dies kann insbesondere dadurch erreicht werden, dass die Hebevorrichtung einen Gegenpol umfasst. Der Magnet kann beispielsweise an dem Riegel oder an der Zeitschaltuhr angeordnet sein. Der Gegenpol kann an dem anderen dieser beiden Teile angeordnet sein. In manchen Ausführungsformen mit an dem Riegel angeordnetem Magneten kann der Gegenpol an der Zeitschaltuhr angeordnet sein. In manchen Ausführungsformen mit an der Zeitschaltuhr angeordnetem Magneten kann der Gegenpol an dem Riegel angeordnet sein. Zum Zwecke der Beschreibung der vorliegenden Erfindung bezeichnet eine Anordnung eines Objekts (Magnet, Gegenpol, etc.) "an" einer Komponente (Riegel, Zeitschaltuhr), dass diese zumindest mechanisch miteinander verbunden sind oder in Kontakt miteinander stehen. Beispielsweise kann das Objekt auch von der Komponente umfangen oder umschlossen sein oder es kann einstückig mit der Komponente ausgestaltet sein.

Somit kann der Riegel aufgrund der magnetischen Wechselwirkung bewegt werden. In manchen Ausfiihrungsformen kann die magnetische Wechselwirkung zwischen dem Magnet und dem Gegenpol anziehend sein, sodass der Riegel zu der Zeitschaltuhr hin in die zweite Riegelstellung bewegt wird. Alternativ kann die magnetische Wechselwirkung abstoßend sein, sodass der Riegel von der Zeitschaltuhr weg in die zweite Riegelstellung bewegt wird.

Das Auslösen der magnetischen Wechselwirkung kann auf verschiedene Arten bewirkt werden, insbesondere durch eine relative Bewegung von (Permanent-)Magnet und Gegenpol und/oder durch Anschalten des (Elektro-)Magneten.

Beispielsweise kann die magnetische Wechselwirkung bewirkt werden, indem ein Gegenpol in räumliche Nähe zu dem Magnet, vorzugsweise dem Permanentmagnet, gebracht wird (oder vice versa der Magnet in räumliche Nähe zu einem Gegenpol gebracht wird). Hierzu kann in manchen Ausführungsformen der Gegenpol (oder der Magnet) derart an der Zeitschaltuhr angeordnet sein, dass er während des Ablaufens der Brühzeitdauer beispielsweise entlang des Umfangs der Zeitschaltuhr bewegt wird und sich in einer Nullstellung der Zeitschaltuhr in räumlicher Nähe zu dem Magneten (bzw. dem Gegenpol) befindet. Eine solche Anordnung ist bevorzugt in Ausführungsformen mit mechanischen Zeitschaltuhren vorgesehen, die bewegliche Teile aufweisen, welche sich während des Ablaufens der Brühzeitdauer bewegen. Alternativ können aber auch Ausführungsformen mit digitalen Zeitschaltuhren einen Mechanismus aufweisen, welcher bei Ablauf der Brühzeitspanne eine Bewegung von Gegenpol (oder Magnet) hervorruft.

Alternativ oder zusätzlich kann die magnetische Wechselwirkung bewirkt werden, indem ein Elektromagnet angeschaltet wird. In solchen Ausführungsformen kann sich der Gegenpol dauerhaft in räumlicher Nähe zu dem Magneten befinden. Eine solche Anordnung ist bevorzugt in Ausführungsformen mit digitalen Zeitschaltuhren vorgesehen, die bei Ablauf der Brühzeitspanne ein elektrisches Signal ausgeben, welches zum Anschalten des Elektromagneten genutzt werden kann. Alternativ können aber auch Ausführungsformen mit mechanischen Zeitschaltuhren einen Mechanismus aufweisen, welcher bei Ablauf der Brühzeitspanne ein Anschalten des Elektromagneten hervorruft.

In der zweiten Riegelstellung lässt der Riegel eine Entspannung der Feder zu. Im Zuge dieser Entspannung kann die Feder eine Hebekraft auf das Sieb ausüben und somit das Sieb von der ersten Siebposition in die zweite Siebposition heben. Die Hebekraft ist hierbei durch die Auslegung der Feder vorzugsweise derart, dass ein mit Extraktionsgut befülltes Sieb so weit angehoben wird, dass es sich - bei ordnungsgemäß mit Wasser befüllter Zubereitungsvorrichtung - nicht in Kontakt mit Wasser befindet.

In manchen Ausführungsformen kann die Feder eine Schraubendruckfeder umfassen, welche komprimiert werden kann um das Sieb in die erste Siebposition zu bringen und bei Entspannung eine Bewegung in die zweite Siebposition hervorruft. Eine solche Feder ist in der ersten Siebposition gestaucht und steht unter Spannung. In der zweiten Siebposition ist sie im Wesentlichen entspannt oder zumindest weniger gespannt als in der ersten Siebposition.

In anderen Ausführungsformen kann die Feder eine Zugfeder umfassen, welche gedehnt werden kann um das Sieb in die erste Siebposition zu bringen und bei Entspannung eine Bewegung in die zweite Siebposition hervorruft. Eine solche Feder ist in der ersten Siebposition gedehnt und steht unter Spannung. In der zweiten Siebposition ist sie im Wesentlichen entspannt oder zumindest weniger gespannt als in der ersten Siebposition.

Die erste Siebposition entspricht hierbei einer Brühposition, welche für die Dauer des Brühvorgangs eingenommen wird. Die zweite Siebposition entspricht hierbei einer Hebeposition, welche bei Ablauf des Brühvorgangs eingenommen wird.

In manchen Ausführungsformen umfasst die Hebevorrichtung eine Auslöseeinrichtung, die dazu ausgelegt ist, den Riegel von der ersten Riegelstellung in die zweite Riegelstellung zu bewegen, unabhängig davon ob die Zeitschaltuhr in Nullstellung ist. Die Auslöseeinrichtung kann beispielsweise einen Druckknopf umfassen, welcher derart mit dem Riegel verbunden ist, dass eine Betätigung des Knopfes zu einer Druckkraft auf den Riegel führt, welche eine Verschiebung des Riegel von der ersten Riegelstellung in die zweite Riegelstellung bewirkt.

### Kurzbeschreibung der Figuren

In der folgenden Beschreibung von Ausführungsbeispielen der Erfindung wird auf die beigefügten Zeichnungen Bezug genommen, die zeigen:
- FIG. 1A: eine schematische Darstellung einer Ausführungsform einer Zubereitungsvorrichtung in Brühposition, mit einem Teesieb in einer ersten Siebposition;
- FIG. 1B: eine schematische Darstellung der Zubereitungsvorrichtung der FIG. 1A in Hebeposition, mit einem Teesieb in einer zweiten Siebposition;
- FIG. 2A: eine schematische Darstellung eines Siebs mit einer Hebevorrichtung gemäß einer Ausführungsform, in einer ersten Siebposition;
- FIG. 2B: eine schematische Darstellung eines Siebs mit der Hebevorrichtung gemäß FIG. 2A, in einer zweiten Siebposition;
- FIG. 3A: eine Querschnittsansicht eines Siebs mit einer Hebevorrichtung gemäß einer Ausführungsform, in einer ersten Siebposition;
- FIG. 3B: eine Querschnittsansicht eines Siebs mit der Hebevorrichtung gemäß FIG. 3A, in einer zweiten Siebposition;
- FIG. 4: eine Explosionszeichnung eines Siebs mit einer Hebevorrichtung gemäß einer Ausführungsform;
- FIG. 5A bis 5D: Querschnitte einer Hebevorrichtung gemäß einer Ausführungsform, in einer Abfolge von Zuständen während des Betriebs;
- FIG. 6: eine Querschnittsansicht eines Siebs mit einer Hebevorrichtung gemäß einer weiteren Ausführungsform;
- FIG. 7: eine Querschnittsansicht eines Siebs mit einer Hebevorrichtung gemäß einer weiteren Ausführungsform;
- FIG. 8A: eine Querschnittsansicht eines Siebs mit einer Hebevorrichtung gemäß einer weiteren Ausführungsform, in einer ersten Siebposition;
- FIG. 8B: eine Querschnittsansicht eines Siebs mit der Hebevorrichtung gemäß FIG. 8A, in einer zweiten Siebposition;
- FIG. 9: eine Explosionszeichnung eines Siebs mit einer Hebevorrichtung gemäß einer Ausführungsform.

### Beschreibung von Ausführungsbeispielen

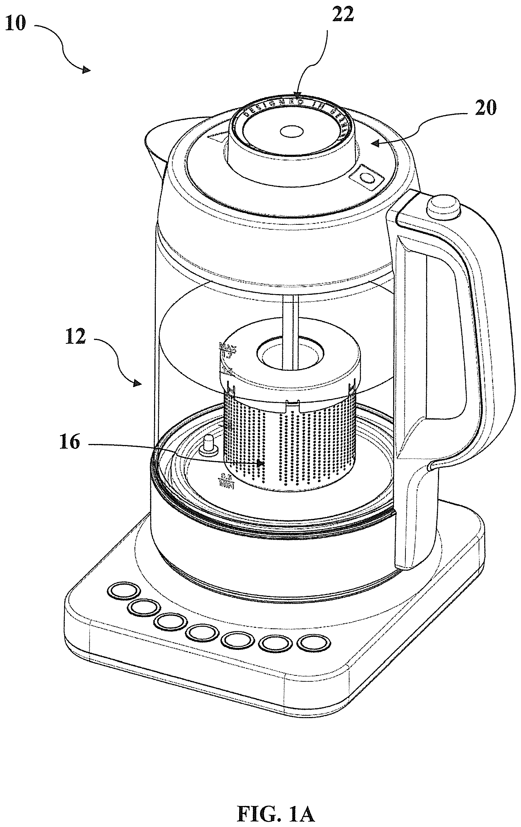

FIG. 1A zeigt einen Teekocher 10 in Brühposition. Der Teekocher 10 umfasst ein Gehäuse 12 und ein Teesieb 16. Das Gehäuse umfängt einen Raum zur Aufnahme von Wasser. In FIG. 1A befindet sich das Teesieb 16 in einer ersten Siebposition, innerhalb des Raums zur Aufnahme von Wasser, sodass es bei Befüllung des Raums mit Wasser in Kontakt mit dem Wasser ist. Es kann somit in dieser Brühposition, ein Tee ausgehend von Teeblättern, die vor dem Betrieb in das Teesieb eingefüllt wurden, zubereitet werden.

Der Teekocher 10 umfasst ferner eine Hebevorrichtung 20 zum Heben des Siebs. Die Hebevorrichtung 20 weist eine mechanische Zeitschaltuhr 22 zum Einstellen einer gewünschten Brühzeit auf.

Die Zeitschaltuhr 22 ist ähnlich zu einer Eieruhr zu bedienen. Eine gewünschte Brühzeit kann durch Verdrehen der Zeitschaltuhr 22 gegenüber den übrigen Komponenten der Hebevorrichtung 20 eingestellt werden. Hierzu weist die Zeitschaltuhr ein Zifferblatt auf, auf dem anhand eines Zeigers die eingestellte Zeitspanne abgelesen werden kann. Die Zeitschaltuhr beginnt die Zeitmessung sobald eine Zeitspanne eingestellt wurde (beispielsweise durch Loslassen der verdrehten Komponente). Während des Ablaufens der Zeit zeigen Zifferblatt und Zeiger die noch verbleibende Restlaufzeit an. Bei Ablauf der Zeitspanne hebt die Hebevorrichtung das Teesieb von der ersten Siebposition in eine zweite Siebposition. Der Teekocher befindet sich dann in Hebeposition.

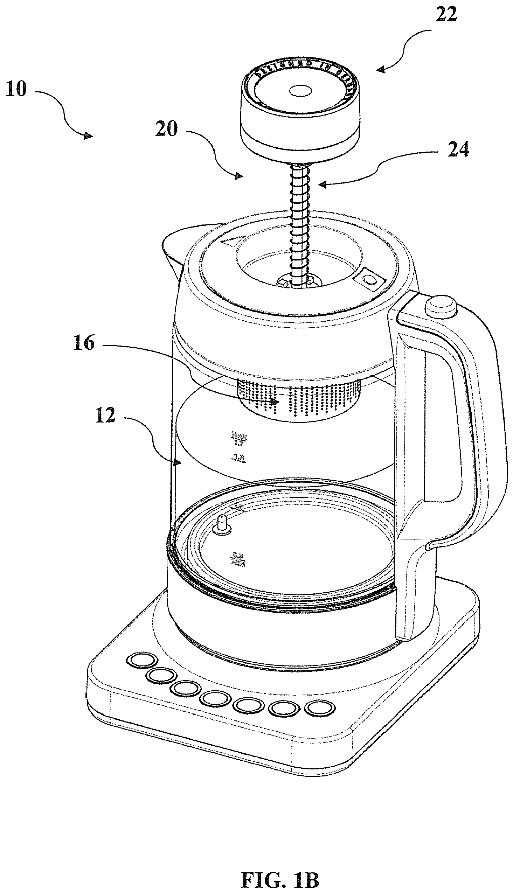

FIG. 1B zeigt den Teekocher 10 der FIG. 1A in Hebeposition. Die Hebevorrichtung 20 wurde ausgelöst, sodass ihre Feder 24 das Sieb 16 in die zweite Siebposition angehoben hat. Diese zweite Siebposition ist im dargestellten Fall innerhalb des von dem Gehäuse 12 umfangenen Raums, jedoch höher als die erste Siebposition. Hierdurch wird sichergestellt, dass - selbst falls der Teekocher 10 bis zu einer Maximalbefüllung mit Wasser gefüllt ist - das Sieb 16 sich oberhalb der Wasseroberfläche befindet. Im Sieb befindliche Teeblätter sind somit nicht mehr im Kontakt mit dem Wasser. Die Zubereitung des Tees ist abgeschlossen oder zumindest unterbrochen. Zusammen mit dem Sieb 16 wurde auch die Zeitschaltuhr 22 angehoben.

Falls der Nutzer die Extraktion fortsetzen möchte, kann die Hebevorrichtung 20 durch Aufwendung von Kraft entgegen der Feder 24 und durch Einstellen einer Restbrühzeit zurück in die in FIG. 1A dargestellte Brühposition gebracht werden.

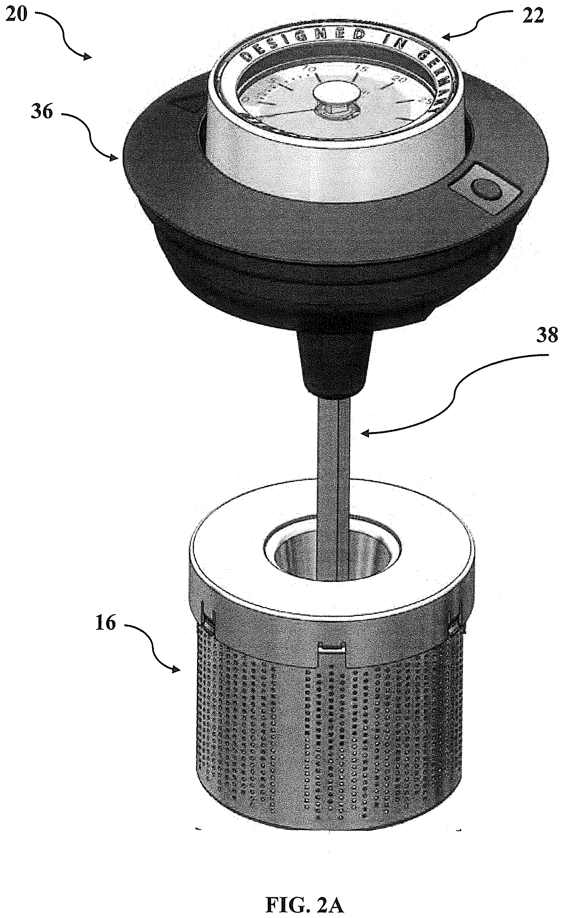

FIG. 2A zeigt eine schematische Darstellung eines Siebs 16 mit einer Hebevorrichtung 20, in einer ersten Siebposition. Diese erste Siebposition entspricht der Anordnung während des Brühvorgangs, d.h. beispielsweise wie bei dem Teekocher 10 in Brühposition gemäß FIG. 1A.

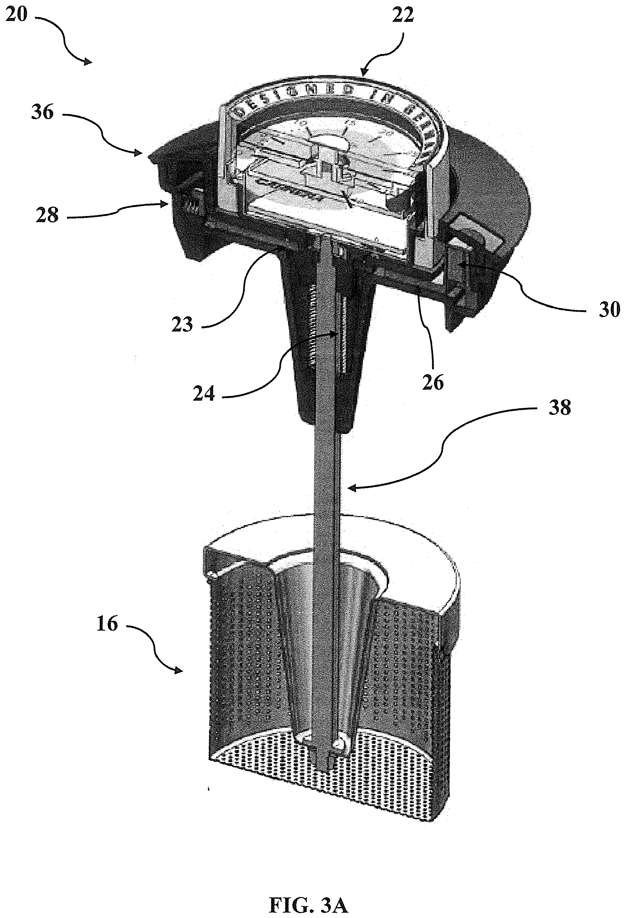

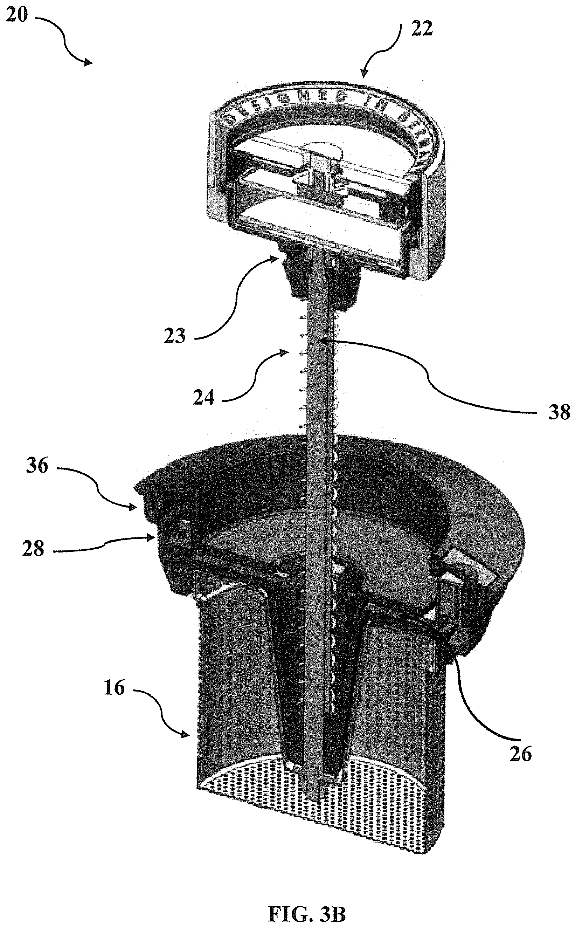

Die Hebevorrichtung 20 umfasst eine Zeitschaltuhr 22, eine Feder (nicht sichtbar) zur Erzeugung einer Hebekraft auf das Sieb, einen Riegel (nicht sichtbar) und einen Magneten (nicht sichtbar), wie nachfolgend insbesondere mit Bezug auf FIG. 3A und 3B beschrieben. Die Hebevorrichtung 20 umfasst ferner einen Rahmen 36 zur Befestigung der Hebevorrichtung an einem Teekocher. Der Rahmen 36 kann insbesondere in einen Deckel oder eine Deckelaussparung des Teekochers eingesetzt werden, wie in FIG. 1A dargestellt. Die Hebevorrichtung 20 umfasst zudem einen Führungsstab 38 zur Führung der Feder entlang einer Achse. Der Führungsstab ist einerseits mit der Zeitschaltuhr 22 und andererseits mit dem Sieb 16 verbunden. Seine Länge, zusammen mit der Auslegung der Feder, bestimmt den Hub der Hebevorrichtung und somit den Abstand zwischen der ersten Siebposition und einer zweiten Siebposition.

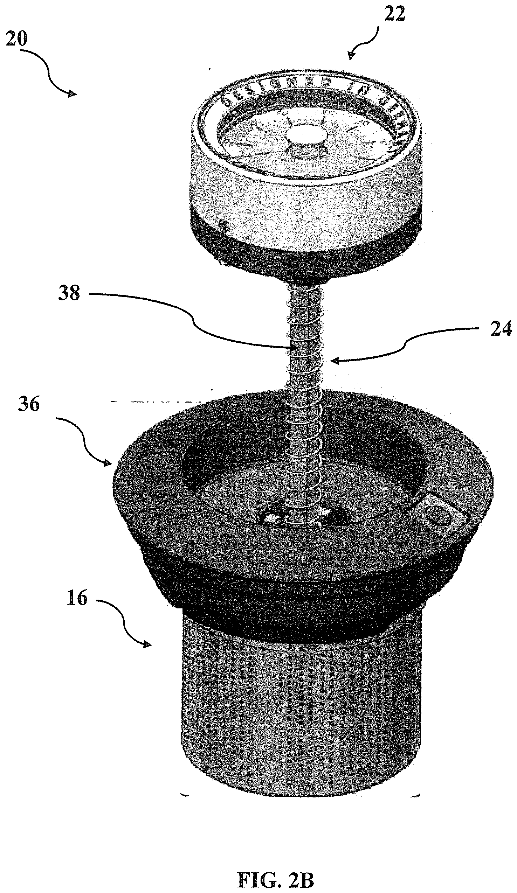

FIG. 2B zeigt das Sieb 16 und die Hebevorrichtung 20 gemäß FIG. 2A in der zweiten Siebposition. Diese zweite Siebposition entspricht der Anordnung nach Abschluss des Brühvorgangs, d.h. beispielsweise wie bei dem Teekocher 10 in Hebeposition gemäß FIG. 1B. Das Sieb 16 ist nun näher an dem Rahmen 36 angeordnet, welcher beispielsweise mit einem Deckel des Teekochers verbunden sein kann, wie in FIG. 1B dargestellt.

Die Hebevorrichtung 20 weist eine Feder 24 auf, welcher als Schraubendruckfeder ausgestaltet ist, die um den Führungsstab 38 herum gewickelt ist. Somit führt der Führungsstab 38 die Feder 24. Die Feder 24 liegt an der Zeitschaltuhr 22 und dem Rahmen 36 an. Im komprimierten Zustand der Feder (FIG. 2A) können die Zeitschaltuhr 22 und der Rahmen 36 also in räumlicher Nähe zueinander stehen.

In FIG. 2B ist die Feder 24 im länglichen, im Wesentlichen entspannten Zustand dargestellt. In diesem im Wesentlichen entspannten Zustand, bewirkt die Feder 24, dass die Zeitschaltuhr 22 auf Abstand zu dem Rahmen 36, gehalten wird. Die feste Verbindung zwischen Zeitschaltuhr 22 und Sieb 16 mittels des Führungsstabs 38 führt dazu, dass gleichzeitig mit der Zeitschaltuhr auch das Sieb angehoben wird. Die Feder 24 übt also eine Hebekraft auf die Zeitschaltuhr 22 und das Sieb 16 aus.

Die Hebevorrichtung 20 der FIG. 2A und 2B bewirkt also ein Anheben des Siebs mit Hilfe der Hebekraft der Feder 24. Das Auslösen der Hebekraft durch Lösen der Feder 24 wird mit Hilfe eines Riegels in der Hebevorrichtung 20 bewirkt, wie im Folgenden anhand der FIG. 3A und 3B beschrieben.

FIG. 3A zeigt einen Querschnitt eines Siebs 16 mit einer Hebevorrichtung 20, in einer ersten Siebposition. Die Hebevorrichtung 20 weist eine Schraubendruckfeder 24 auf, welche in FIG. 3A im komprimierten, angespannten Zustand dargestellt ist. Die Feder 24 liegt einerseits an einem Rahmen 36 der Hebevorrichtung und andererseits an einer Zeitschaltuhr 22 der Hebevorrichtung an. Sie ist um einen Führungsstab 38 gewickelt, der als Führung für die Feder 24 dient und die Zeitschaltuhr 22 mit dem Sieb 16 verbindet.

Die Hebevorrichtung 20 weist zudem einen Riegel 26 auf, welcher verhindert, dass sich die Feder 24 entspannt. Hierzu befindet sich der Riegel 26 in einer ersten Riegelposition. Diese ist im dargestellten Fall dadurch gekennzeichnet, dass ein Teil des Riegels mit einer Nut 23 der Zeitschaltuhr in Eingriff kommt. Der Riegel 26 hält die Feder 24 gespannt und verhindert somit eine Bewegung der Zeitschaltuhr 22 und des Siebs 16 relativ zu den übrigen Komponenten der Hebevorrichtung, insbesondere dem Rahmen 36. Das Sieb 16 wird trotz komprimierter (gespannter) Druckfeder durch den Eingriff des Riegels 26 in der ersten Siebposition gehalten.

Der Riegel 26 umfasst eine Riegelfeder 28, welche den Riegel in dieser ersten Riegelposition hält. Die Riegelfeder 28 stellt sicher, dass der genannte Teil des Riegels und die Nut 23 in Eingriff bleiben und nicht (beispielsweise aufgrund von Stößen) voneinander gelöst werden.

FIG. 3B zeigt einen Querschnitt des Siebs 16 mit der Hebevorrichtung 20 gemäß FIG. 3A, wobei sich das Sieb in einer zweiten Siebposition befindet. Im Gegensatz zu FIG. 3A stehen der Riegel 26 und die Nut 23 der Zeitschaltuhr nicht mehr in Eingriff.

Die Feder 24 ist somit im Wesentlichen entspannt und hält (gestützt von dem Führungsstab 38) die Zeitschaltuhr 22 und den Rahmen 36 auf Abstand. Die feste Verbindung des Siebs 16 mit der Zeitschaltuhr 22 führt gleichzeitig zu einer Anhebung des Siebs 16 hin zu dem Rahmen 36.

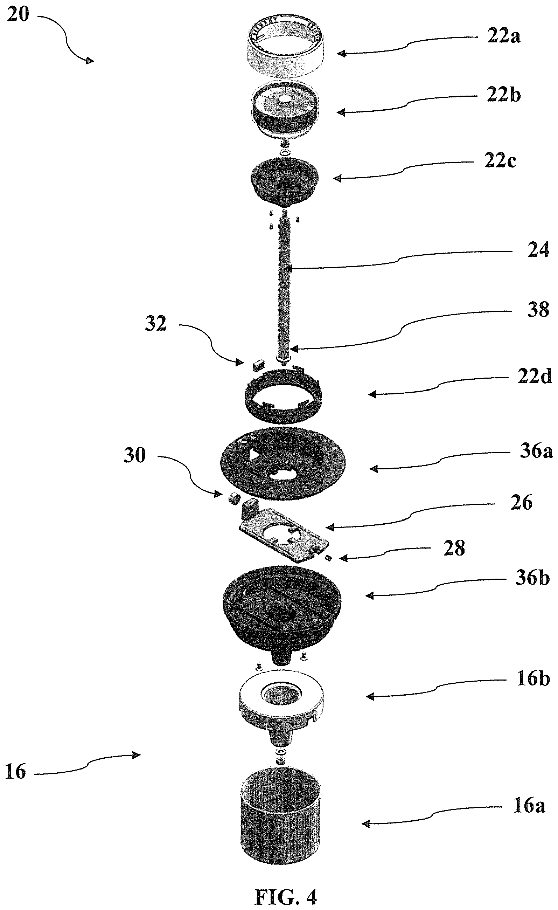

FIG. 4 zeigt eine Explosionszeichnung eines Siebs 16 mit einer Hebevorrichtung 20, die im Wesentlichen der Ausführungsformen der FIG. 2A - 3B entsprechen.

Das Sieb 16 umfasst eine perforierte Siebwandung 16a, die einen Raum zur Aufnahme der Teeblätter umschließt, und einen Siebdeckel 16b. Der Siebdeckel 16b und die Siebwandung 16a sind trennbar miteinander verbunden, um Teeblätter einzufüllen oder das Sieb zu reinigen.

Die Hebevorrichtung 20 umfasst eine Zeitschaltuhr 22, eine um einen Führungsstab 38 angeordnete Feder 24, einen Riegel 26 und einen Permanentmagneten 30.

Die Zeitschaltuhr ist eine mechanische Zeitschaltuhr mit einer Anzeige zur Darstellung der verbleibenden Restlaufzeit mittels eines Zeigers und eines Zifferblatts. Sie umfasst ein Drehknopfoberteil 22a, Timer 22b, Timergehäuse 22c und Drehknopfunterteil 22d. Drehknopfoberteil 22a und Drehknopfunterteil 22d bilden einen Drehknopf. Durch Verdrehen des Drehknopfs kann die gewünschte Brühzeitspanne eingestellt werden. Während des Ablaufens der Brühzeitdauer bewegen sich die beweglichen Teile der Zeitschaltuhr zurück zu einer Nullstellung. Die Zeitschaltuhr kann dazu genutzt werden, die gewünschte Brühzeitspanne ab Beginn des Brühvorgangs zu messen. Bei Ablauf der Brühzeitspanne erreicht die Zeitschaltuhr die Nullstellung, hier mit einer Zeigerstellung auf "0" auf dem Zifferblatt dargestellt.

Der Magnet 30 ist dazu ausgelegt, in der Nullstellung der Zeitschaltuhr den Riegel 26 mittels magnetischer Wechselwirkung von einer ersten Riegelstellung in eine zweite Riegelstellung zu bewegen. Im dargestellten Fall handelt es sich um einen Permanentmagneten 30, der an dem Riegel 26 angeordnet ist und stetig ein magnetisches Feld in seinem Umfeld erzeugt um eine anziehende Wechselwirkung mit einem Gegenpol 32 einzugehen.

Der Gegenpol 32 kann als ein weiterer Permanentmagnet ausgeführt sein oder aus einem anderen ferromagnetischen Material sein, der an der Zeitschaltuhr 22 in dem Drehknopfunterteil 22d angeordnet ist. Dieser Gegenpol 32 wird bei Verdrehen des Drehknopfs zur Einstellung einer Brühzeitspanne von dem Magneten 30 entfernt und bewegt sich während des Ablaufens der Brühzeitspanne zusammen mit dem Drehknopfunterteil 22d. Der Magnet 30 und der Gegenpol 32 sind derart angeordnet, dass sie in der Nullstellung der Zeitschaltuhr 22 in unmittelbarer Nähe zueinander stehen und eine anziehende Wechselwirkung eingehen.

Im dargestellten Fall ist der Magnet 30 als separates Bauteil, neben dem hier aus Kunststoff hergestellten Riegel 26, vorgesehen. In anderen Ausführungsformen kann ein Magnet stattdessen einstückig mit dem Riegel, z.B. durch Magnetisierung eines Teils eines metallischen Riegels, ausgeführt sein. Dies gilt entsprechend für den Gegenpol.

Der Riegel 26 ist ein Schieberiegel, der zwischen der ersten Riegelstellung und der zweiten Riegelstellung verschiebbar ist. Er wird durch eine Riegelfeder 28, welche auf den Riegel 26 eine Riegelfederkraft hin zu der ersten Riegelstellung ausübt, in der ersten Riegelstellung gehalten. Der Riegel weist mehrere Vorsprünge auf, von denen einer mit einer oder mehreren Nuten (nicht sichtbar) in der Zeitschaltuhr in Eingriff kommen kann.

Der Riegel 26 kann aufgrund der anziehenden magnetischen Wechselwirkung zwischen dem Magnet 30 und dem Gegenpol 32 zu der Zeitschaltuhr 22 hin in die zweite Riegelstellung bewegt werden. Die magnetische Wechselwirkung wird bewirkt, indem der Gegenpol 32 in räumliche Nähe zu dem Permanentmagnet 30 gebracht wird. Hierzu ist der Gegenpol 32 derart an dem Drehknopfunterteil 22d angeordnet, dass er während des Ablaufens der Brühzeitdauer entlang des Umfangs der Zeitschaltuhr 22 bewegt wird und in einer Nullstellung der Zeitschaltuhr 22 in räumlicher Nähe zu dem Magneten 30 befindet. In dieser Anordnung sind andersartige magnetische Pole von Permanentmagnet 30 und Gegenpol 32 zueinander ausgerichtet, sodass die Wechselwirkung anziehend ist.

Der Riegel 26 wird umschlossen von einem Rahmen mit Rahmenoberteil 36a und Rahmenunterteil 36b. Der Rahmen, im dargestellten Fall das Rahmenunterteil 36b, dient zudem als ein Angriffspunkt für die Feder 24.

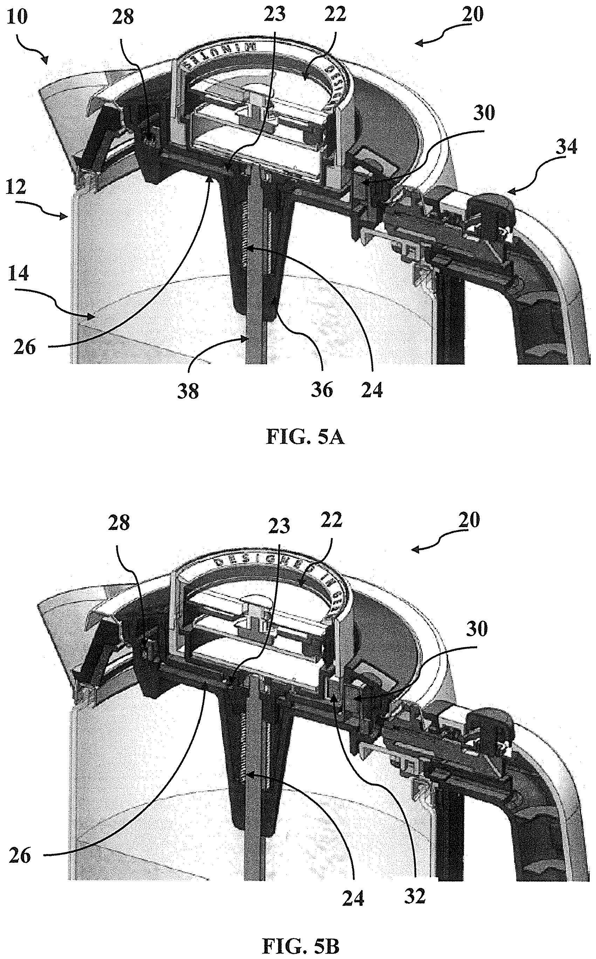

FIG. 5A bis 5D zeigen Querschnitte der Hebevorrichtung 20 gemäß FIG. 4 in einer Abfolge von Zuständen während des Betriebs. Die Hebevorrichtung 20 umfasst - wie oben dargelegt - eine Zeitschaltuhr 22, eine um einen Führungsstab 38 angeordnete Feder 24, einen Riegel 26 und einen Permanentmagneten 30.

FIG. 5A zeigt die Hebevorrichtung 20 während des Brühvorgangs in einem Teekocher 10 mit einem Gehäuse 12 und einem von dem Gehäuse umfangenen Raum 14 zur Aufnahme von Wasser, kurz: Innenraum. Das Sieb (nicht dargestellt) befindet sich in einer ersten Siebposition innerhalb des Innenraums in Kontakt mit dem im Innenraum vorhandenen Wasser. Der Riegel 26 befindet sich in der ersten Riegelposition, sodass ein Teil des Riegels 26 mit einer Nut 23 der Zeitschaltuhr 22 in Eingriff kommt. Der Riegel 26 verhindert somit eine Entspannung der Feder 24, welche zwischen dem Rahmen 36 und der Zeitschaltuhr 22 angelegt ist.

Der Riegel 26 umfasst eine Riegelfeder 28, welche den Riegel in dieser ersten Riegelposition hält. Die Riegelfeder 28 stellt sicher, dass der genannte Teil des Riegels und die Nut 23 in Eingriff bleiben und nicht - beispielsweise aufgrund von Stößen - voneinander gelöst werden.

Des Weiteren ist in FIG. 5A auch eine Auslöseeinrichtung 34 in Form eines Druckknopfes dargestellt. Dieser ist derart mit dem Riegel verbunden ist, dass eine Betätigung des Knopfes zu einer Druckkraft auf den Riegel führt, welche eine Verschiebung des Riegels von der ersten Riegelstellung in die zweite Riegelstellung bewirkt, selbst wenn die Zeitschaltuhr nicht in Nullstellung ist. Der Druckknopf 34 ist dazu ausgelegt ist, den Riegel 26 von der ersten Riegelstellung in die zweite Riegelstellung zu bewegen, unabhängig davon ob die Zeitschaltuhr in Nullstellung ist. Dies ermöglicht einen manuellen Abbruch des Brühvorgangs, bereits vor Ende der Brühzeitspanne.

Des Weiteren ermöglicht die manuelle Auslöseeinrichtung einen manuellen Betrieb. Hierzu kann die Brühzeitspanne beispielsweise auf "unendlich" gestellt werden. In diesem Betriebsmodus wird die Nullstellung der Zeitschaltuhr nicht erreicht und eine Auslösung der Hebevorrichtung durch den Magneten wird nicht erfolgen. Nichtsdestotrotz kann der Nutzer den Brühvorgang zu jedem Zeitpunkt manuell durch Betätigung des Druckknopfes 34 beenden, beispielsweise sobald er mittels Sichtkontrolle der Einfärbung des Tees oder durch Überprüfung des Geschmacks des Tees den Brühvorgang die gewünschte Qualität ermittelt hat.

FIG. 5B zeigt die Hebevorrichtung 20 am Ende des Brühvorgangs. Während der Brühzeitspanne wurde der Gegenpol 32 am Umfang der Zeitschaltuhr 22 entlang bewegt. In der dargestellten Nullstellung (nach Ablauf der Brühzeitspanne) der Zeitschaltuhr 20 befindet sich der Gegenpol 32 in unmittelbarer Nähe zu dem am Riegel 26 angeordneten Permanentmagnet 30. Hierdurch wirkt eine anziehende magnetische Wechselwirkung zwischen dem Permanentmagnet 30 und dem Gegenpol 32. Diese verschiebt den Riegel 26 von der ersten Riegelposition, entgegen der Druckkraft der Riegelfeder 28, hin zu der zweiten Riegelposition. Bei Erreichen der zweiten Riegelposition ist der Eingriff von Riegel 26 und Nut 23 der Zeitschaltuhr 22 gelöst. Eine Entspannung der Feder 24 steht unmittelbar bevor.

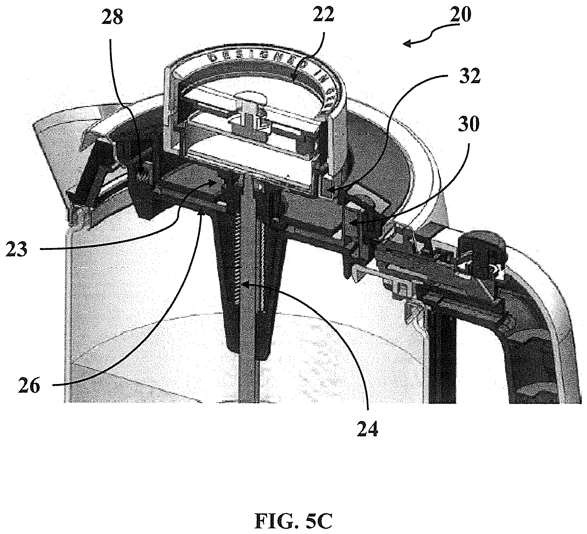

FIG. 5C zeigt die Hebevorrichtung 20 in einem Moment während der Entspannung der Feder 24. Die Nut 23 der Zeitschaltuhr 22 wurde - zusammen mit der Zeitschaltuhr als Ganzem - durch die Hebekraft der Feder 24 gegenüber dem Riegel 26 und dem Rahmen angehoben. Ein durch den Führungsstab mit der Zeitschaltuhr verbundenes Sieb wird ebenfalls angehoben.

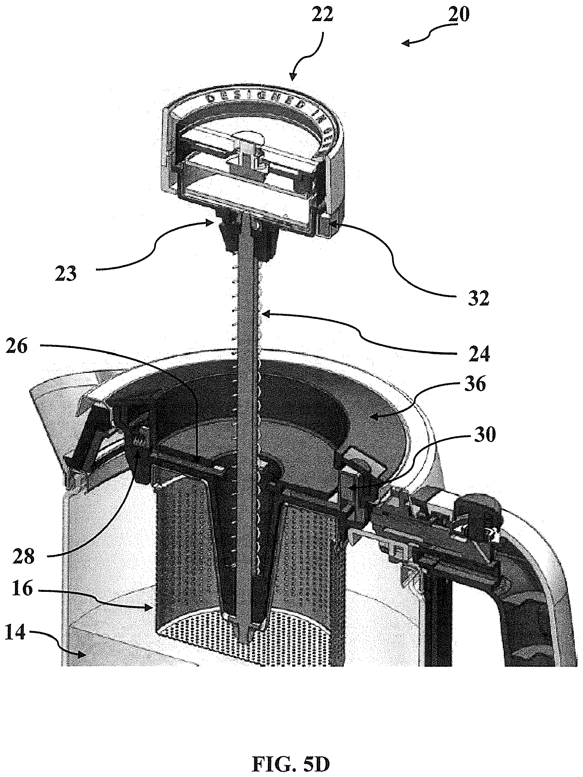

FIG. 5D zeigt die Hebevorrichtung 20 mit dem Sieb 16 in der zweiten Siebposition, d.h. nach Abschluss des Brühvorgangs und des Hebevorgangs. Die Feder 24 ist im Wesentlichen entspannt. Hierdurch wird die Zeitschaltuhr 22 auf Abstand zu dem Rahmen 36 gehalten. Durch Anhebung der Zeitschaltuhr 22 und starrer Verbindung zwischen dem Sieb 16 und der Zeitschaltuhr 22 mittels des Führungsstabs wurde auch das Sieb 16 in eine zweite Siebposition angehoben, in der es sich zwar noch in dem Innenraum 14 befindet, nicht jedoch in Kontakt mit dem Wasser.

Der Riegel 26 wurde durch die Riegelfeder 28 wieder in die erste Riegelposition gebracht, sodass ein Hinunterdrücken von Zeitschaltuhr 22 und Sieb 16 zurück in die erste Siebposition zu einem erneuten Eingriff von Riegel 26 und Nut 23 führt. Hierzu weist die Zeitschaltuhr 22 neben der Nut 23 eine abgeschrägte Führungsflanke für den Riegel 26 vor. Der in Eingriff kommende Teil des Riegel 26 kann gleichartig abgeschrägt sein, um den Eingriff zu erleichtern. So kann beispielsweise der Brühvorgang fortgesetzt werden oder die Vorrichtung nach einer Reinigung kompakt verstaut werden.

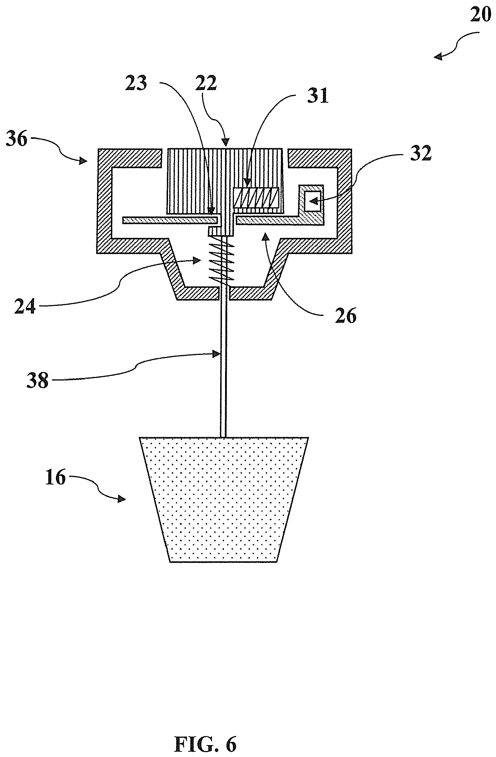

FIG. 6 zeigt einen Querschnitt eines Siebs 16 mit einer Hebevorrichtung 20 gemäß einer weiteren Ausführungsform. Ähnlich zu den bisher beschriebenen Ausführungsformen weist die Hebevorrichtung 20 eine Zeitschaltuhr 22, eine Feder 24, einen Riegel 26, einen Rahmen 36 und einen Führungsstab 38 auf. Im Gegensatz zu den mit Bezug auf die vorstehenden Figuren beschriebenen Ausführungsformen ist die Zeitschaltuhr 22 eine digitale Zeitschaltuhr. Die Hebevorrichtung 20 weist zudem einen Elektromagneten 31, welcher an der Zeitschaltuhr 22 angeordnet ist, sowie einen Gegenpol 32, welcher an dem Riegel 26 angeordnet ist, auf. Der Gegenpol 32 befindet sich in räumlicher Nähe zu dem Magneten.

Bei Ablauf der an der digitalen Zeitschaltuhr 22 eingestellten Zeitspanne, wird der Elektromagnet 31 angeschaltet sodass ein magnetisches Feld bewirkt wird. Die digitale Zeitschaltuhr 22 gibt bei Ablauf der Brühzeitspanne ein elektrisches Signal aus, welches zum Anschalten des Elektromagneten 31 genutzt wird. So wird eine anziehende Kraft des Elektromagneten auf den Gegenpol 32 bewirkt. Die Anziehung führt zu einer Verschiebung des Riegels 26, sodass der Eingriff des Riegels mit der Nut 23 der Zeitschaltuhr 22 gelöst wird. Dies führt - ähnlich wie bei den vorstehend beschriebenen Ausführungsformen zu einer Hebekraft auf das Sieb.

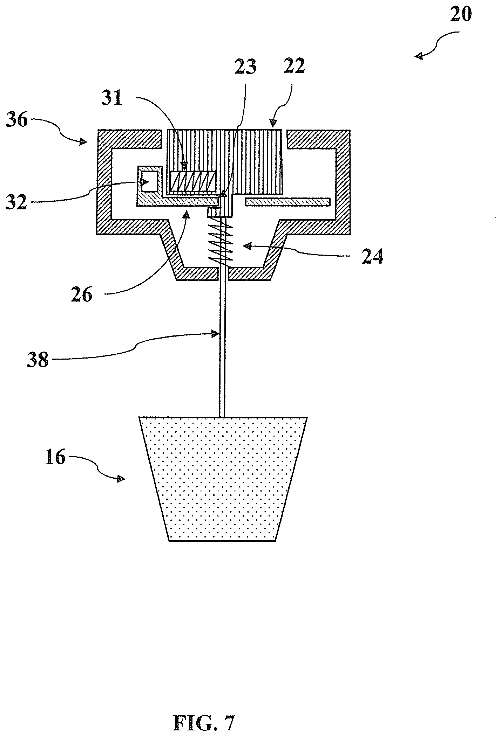

FIG. 7 zeigt einen Querschnitt eines Siebs 16 mit einer Hebevorrichtung 20 gemäß einer weiteren Ausführungsform. Diese entspricht im Wesentlichen dem Ausführungsbeispiel der FIG. 6, wobei jedoch - im Gegensatz zu FIG. 6 - die Nut 23 der Zeitschaltuhr, die in Eingriff mit dem Riegel 26 steht, sich auf der gleichen Seite wie die Anordnung von Magnet 31 und Gegenpol 32 befindet.

Dementsprechend sind der Magnet 31 und der Gegenpol 32 auf eine abstoßende magnetische Wechselwirkung (sobald der Elektromagnet angeschaltet wird) ausgelegt. Die abstoßende Wechselwirkung bewirkt eine Verschiebung des Riegels (in der gezeichneten Ansicht nach links), so dass sich der Eingriff von Riegel 26 und Nut 23 löst. Dies führt wiederum - ähnlich wie bei den vorstehend beschriebenen Ausführungsformen zu einer Hebekraft auf das Sieb.

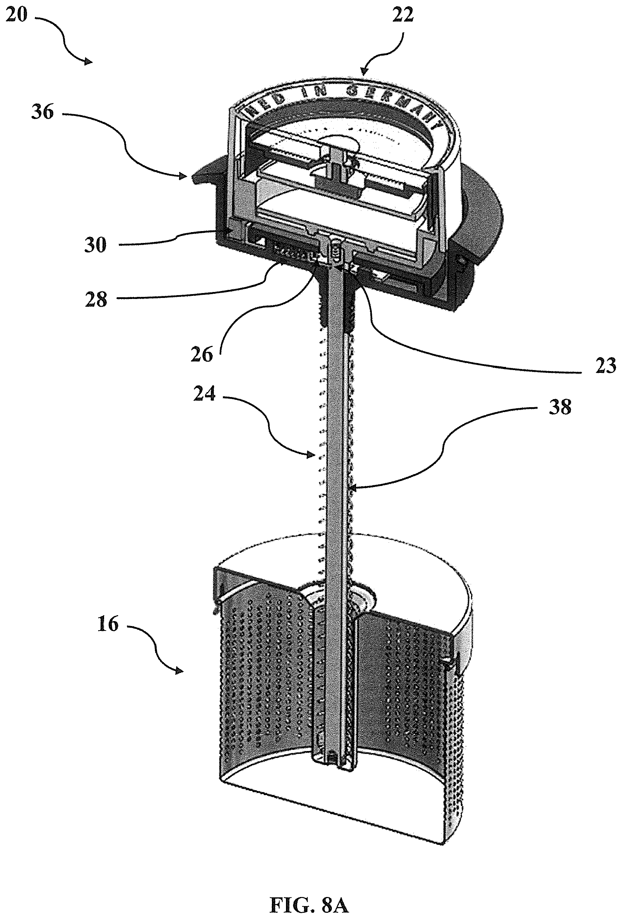

FIG. 8A zeigt einen Querschnitt eines Siebs 16 mit einer Hebevorrichtung 20 gemäß einer weiteren Ausführungsform, in einer ersten Siebposition. Die Hebevorrichtung 20 weist eine Zugfeder 24 auf, welche in FIG. 8A im gedehnten und somit gespannten Zustand dargestellt ist. Die Feder 24 liegt einerseits an einem Rahmen 36 der Hebevorrichtung und andererseits an dem Sieb 16 an. Sie ist um einen Führungsstab 38 gewickelt, der als Führung für die Feder 24 dient und die Zeitschaltuhr 22 mit dem Sieb 16 verbindet.

Die Hebevorrichtung 20 weist zudem einen Riegel 26 auf, welcher verhindert, dass sich die Feder 24 entspannt. Hierzu befindet sich der Riegel 26 in einer ersten Riegelposition. Diese ist im dargestellten Fall dadurch gekennzeichnet, dass ein Teil des Riegels mit einer Nut 23 des Führungsstabs 38 in Eingriff kommt. Der Riegel 26 hält die Feder 24 gespannt und verhindert eine Bewegung des Führungsstabs 38 und des daran befestigten Siebs 16 relativ zu dem Riegel 26 und dem Rahmen 36. Das Sieb 16 wird trotz gedehnter (gespannter) Zugfeder durch den Eingriff des Riegels 26 in der ersten Siebposition gehalten.

Der Riegel 26 umfasst eine Riegelfeder 28, welche den Riegel in dieser ersten Riegelposition hält. Die Riegelfeder 28 stellt sicher, dass der genannte Teil des Riegels und die Nut 23 in Eingriff bleiben und nicht (beispielsweise aufgrund von Stößen) voneinander gelöst werden.

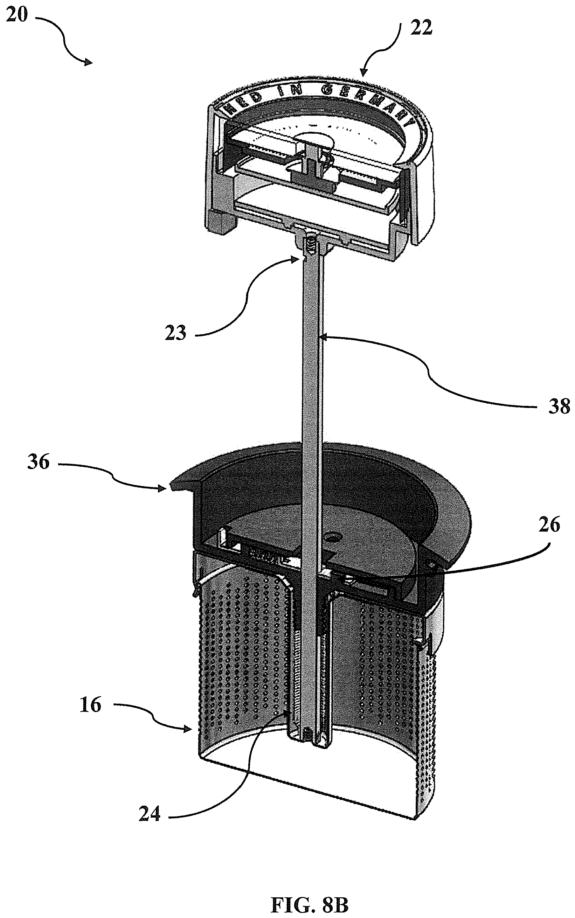

FIG. 8B zeigt einen Querschnitt des Siebs 16 mit der Hebevorrichtung 20 gemäß FIG. 8A, wobei sich das Sieb in einer zweiten Siebposition befindet. Im Gegensatz zu FIG. 3A stehen der Riegel 26 und die Nut 23 des Führungsstabs nicht mehr in Eingriff.

Die Feder 24 hat sich im Vergleich zu FIG. 8A zusammengezogen, ist somit im Wesentlichen entspannt (oder zumindest weniger gespannt als in der ersten Siebposition) und hält gestützt von dem Führungsstab 38 das Sieb 16 nahe am Rahmen 36. Die feste Verbindung des Siebs 16 mit der Zeitschaltuhr 22 durch den Führungsstab 38 führt gleichzeitig zu einer Anhebung der Zeitschaltuhr 22, weg von dem Rahmen 36.

Die Entspannung der Zugfeder 24, hin zu ihrem gestauchten Zustand, wurde dadurch ermöglicht, dass der Riegel 26 bei Erreichen der Nullstellung der Zeitschaltuhr 22 durch die magnetische Anziehung des Magneten 30 in die zweite Riegelposition gebracht wurde. Hierdurch wurde der Eingriff des Riegels 26 mit der Nut 23 in dem Führungsstab 38 gelöst und die Zugfeder konnte durch ihre Entspannung eine Hebekraft auf das Sieb ausüben.

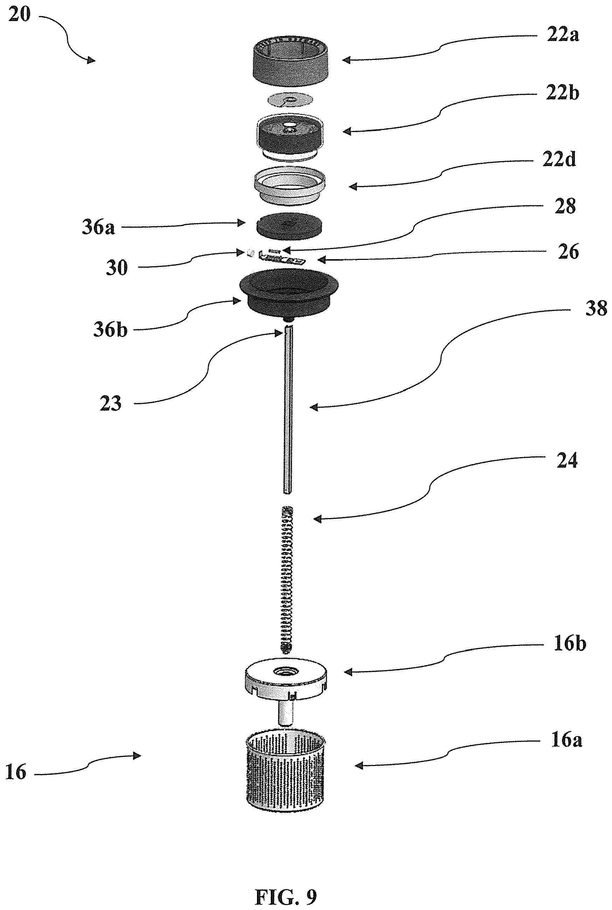

FIG. 9 zeigt eine Explosionszeichnung eines Siebs 16 mit einer Hebevorrichtung 20, die im Wesentlichen der Ausführungsform der FIG. 8A, 8B entsprechen.

Das Sieb 16 umfasst eine perforierte Siebwandung 16a, die einen Raum zur Aufnahme der Teeblätter umschließt, und einen Siebdeckel 16b. Der Siebdeckel 16b und die Siebwandung 16a sind trennbar miteinander verbunden, um Teeblätter einzufüllen oder das Sieb zu reinigen.

Die Hebevorrichtung 20 umfasst eine Zeitschaltuhr 22, einen Riegel 26, einen Permanentmagneten 30 und eine um einen Führungsstab 38 angeordnete Feder 24.

Die Zeitschaltuhr ist eine mechanische Zeitschaltuhr und umfasst ein Drehknopfoberteil 22a, einen Timer 22b und ein Drehknopfunterteil 22d. Drehknopfoberteil 22a und Drehknopfunterteil 22d bilden einen Drehknopf. Durch Verdrehen des Drehknopfs kann die gewünschte Brühzeitspanne eingestellt werden. Während des Ablaufens der Brühzeitdauer bewegen sich die beweglichen Teile der Zeitschaltuhr zurück zu einer Nullstellung.

Der Magnet 30 ist dazu ausgelegt, in der Nullstellung der Zeitschaltuhr den Riegel 26 mittels magnetischer Wechselwirkung von einer ersten Riegelstellung in eine zweite Riegelstellung zu bewegen. Im dargestellten Fall handelt es sich um einen Permanentmagneten 30, der an dem Drehknopfunterteil 22d angeordnet ist und stetig ein magnetisches Feld in seinem Umfeld erzeugt um eine anziehende Wechselwirkung mit dem als Gegenpol ausgestalteten Riegel aus ferromagnetischem Material einzugehen.

Der Magnet 30 wird bei Verdrehen des Drehknopfs zur Einstellung einer Brühzeitspanne von dem als Gegenpol fungierenden Riegel 26 entfernt und bewegt sich während des Ablaufens der Brühzeitspanne zusammen mit dem Drehknopfunterteil 22d. Der Magnet 30 und der Riegel 26 sind derart angeordnet, dass sie in der Nullstellung der Zeitschaltuhr 22 in unmittelbarer Nähe zueinander stehen und eine anziehende Wechselwirkung eingehen.

Der Riegel 26 ist ein Schieberiegel, der zwischen der ersten Riegelstellung und der zweiten Riegelstellung verschiebbar ist. Er wird durch eine Riegelfeder 28, welche auf den Riegel 26 eine Riegelfederkraft hin zu der ersten Riegelstellung ausübt, in der ersten Riegelstellung gehalten. Der Riegel weist mehrere Vorsprünge auf, von denen einer mit einer Nut 23 in dem Führungsstab 38 in Eingriff kommen kann.

Der Riegel 26 kann aufgrund der anziehenden magnetischen Wechselwirkung mit dem Magneten 30 von dem Führungsstab 38 weg in die zweite Riegelstellung bewegt werden. Die magnetische Wechselwirkung wird bewirkt, indem der Magnet 30 in räumliche Nähe zu dem als Gegenpol fungierenden Riegel 26 gebracht wird. Hierzu ist der Magnet 30 derart an dem Drehknopfunterteil 22d angeordnet, dass er während des Ablaufens der Brühzeitdauer entlang des Umfangs der Zeitschaltuhr 22 bewegt wird und in einer Nullstellung der Zeitschaltuhr 22 in räumlicher Nähe zu dem Riegel 26 befindet. In dieser Anordnung ist die Wechselwirkung zwischen Magnet und Riegel anziehend.

Der Riegel 26 wird umschlossen von einem Rahmen mit Rahmenoberteil 36a und Rahmenunterteil 36b. Der Rahmen, im dargestellten Fall das Rahmenunterteil 36b, dient zudem als ein Angriffspunkt für die Feder 24. Der Siebdeckel 16b dient ebenfalls als Angriffspunkt für die Feder.

## Patentansprüche

1. Hebevorrichtung (20) für ein Sieb (16) zur Zubereitung von Extraktionsgetränken, insbesondere für ein Teesieb,
umfassend
eine Zeitschaltuhr (22),
eine Feder (24) zur Erzeugung einer Hebekraft auf ein Sieb (16) einen Riegel (26), welcher zwischen einer ersten Riegelstellung und einer zweiten Riegelstellung bewegbar ist, und
einen Magneten (30, 31), wobei
der Riegel (26) in der ersten Riegelstellung die Feder (24) gespannt hält und der Riegel (26) in der zweiten Riegelstellung eine Entspannung der Feder (24) zulässt und wobei
der Magnet (30, 31) dazu ausgelegt ist, in einer Nullstellung der Zeitschaltuhr (22) den Riegel (26) mittels magnetischer Wechselwirkung von der ersten Riegelstellung in die zweite Riegelstellung zu bewegen.

2. Hebevorrichtung gemäß dem vorstehenden Anspruch, wobei der Riegel (26) eine Riegelfeder (28) aufweist, welche auf den Riegel eine Riegelfederkraft hin zu der ersten Riegelstellung ausübt.

3. Hebevorrichtung gemäß dem einem der vorstehenden Ansprüche, wobei
der Magnet ein Permanentmagnet (30) ist.

4. Hebevorrichtung gemäß dem vorstehenden Anspruch, wobei
der Magnet (30) am Riegel (26) angeordnet ist und
die Hebevorrichtung einen Gegenpol (32) umfasst, welcher an der Zeitschaltuhr (22) angeordnet ist, und derart angeordnet ist, dass der Gegenpol (32) in der Nullstellung in räumlicher Nähe zu dem Magneten (30) ist.

5. Hebevorrichtung gemäß dem Anspruch 3, wobei
der Magnet (30) an der Zeitschaltuhr (22) angeordnet ist und
die Hebevorrichtung einen Gegenpol (32) umfasst, welcher an dem Riegel (26) angeordnet ist, und derart angeordnet ist, dass der Magnet (30) in der Nullstellung in räumlicher Nähe zu dem Gegenpol (32) ist.

6. Hebevorrichtung gemäß Anspruch 4 oder 5, wobei
der Gegenpol (32) und der Magnet (30) eine anziehende oder abstoßende magnetische Wechselwirkung aufweisen, sobald sie in räumlicher Nähe zueinander stehen.

7. Hebevorrichtung gemäß einem der vorstehenden Ansprüche, wobei
die Zeitschaltuhr (22) eine mechanische Zeitschaltuhr ist.

8. Hebevorrichtung gemäß dem Anspruch 1, wobei
der Magnet ein Elektromagnet (31) ist.

9. Hebevorrichtung gemäß dem vorstehenden Anspruch, wobei der Elektromagnet (31) dazu ausgelegt ist, in einer Nullstellung der Zeitschaltuhr (22) ein magnetisches Feld zu erzeugen.

10. Hebevorrichtung gemäß dem vorstehenden Anspruch, wobei
der Magnet (31) an der Zeitschaltuhr angeordnet ist und
die Hebevorrichtung einen Gegenpol (32) umfasst, welcher an dem Riegel (26) angeordnet ist, und derart angeordnet ist, dass der Gegenpol (32) und der Magnet (31) eine anziehende oder abstoßende magnetische Wechselwirkung aufweisen, sobald der Magnet (31) ein magnetisches Feld erzeugt.

11. Hebevorrichtung gemäß einem der Ansprüche 8 bis 10, wobei
die Zeitschaltuhr (22) eine elektronische Zeitschaltuhr ist.

12. Hebevorrichtung gemäß einem der vorstehenden Ansprüche, wobei die Hebevorrichtung eine Auslöseeinrichtung (34) umfasst, die dazu ausgelegt ist, den Riegel (26) von der ersten Riegelstellung in die zweite Riegelstellung zu bewegen, unabhängig davon ob die Zeitschaltuhr in Nullstellung ist.

13. Vorrichtung zur Zubereitung von Extraktionsgetränken, insbesondere Teekocher (10), umfassend
ein Gehäuse (12), welches einen Raum (14) zur Aufnahme von Wasser umfängt,
ein Sieb (16), welches zwischen einer ersten Siebposition, in der das Sieb sich in dem Raum (14) befindet, und einer zweiten Siebposition bewegbar ist, und
eine Hebevorrichtung (20) gemäß einem der vorstehenden Ansprüche, wobei die Hebevorrichtung (20) in der ersten Riegelstellung das Sieb (16) in der ersten Siebposition hält und in der zweiten Riegelstellung eine Bewegung des Siebs in die zweite Siebposition zulässt.
